# DEMANDE DE BREVET EUROPEEN

(11) **EP 2 584 684 A1**
(43) Date de publication de la demande: **24.04.2013**
(21) Numéro de dépôt: 12187250.1
(22) Date de dépôt: 04.10.2012
(51) Int. Cl.: H02K 49/04

(54) **Stator interchangeable de ralentisseur éléctromagnetique et ralentisseur éléctromagnetique équipé d'un tel stator**

(30) Priorité: 17.10.2011 FR 1159349
(71) Demandeur: Telma, 95310 Saint-Ouen L'Aumône (FR)
(72) Inventeur: Mbarek, Akafou, 78130 Les Mureaux (FR); Belance, Romuald, 95170 Deuil la Barre (FR); Lounis, Rafik, 95000 Cergy (FR); Quennet, Nicolas, 95240 Cormeilles en Parisis (FR)
(74) Mandataire: Cabinet Plasseraud

(57) **Abrégé**

L'invention concerne, dans son mode de réalisation préféré, un stator (1') de ralentisseur électromagnétique destiné au montage sur une boîte de vitesses ou sur un carter de pont d'un véhicule, comprenant au moins un ensemble de bobines (2) électromagnétiques, deux flasques (5', 5") radiaux annulaires identiques et un épanouissement (6) polaire asymétrique sur chaque face transversale radiale des deux extrémités de chacune desdites bobines électromagnétiques, et fixé au moyen d'une vis axiale centrale (7), des plots de fixation troués symétriques par rapport à un plan médian (M) entre lesdites faces transversales et parallèle à ces dernières, fixés audit support (5', 5") de bobine (2) électromagnétique pour fixer ledit stator (1') du côté de l'une ou l'autre desdites faces transversales à un support de stator dudit véhicule à l'aide d'organes de fixation.

## Description

L'invention concerne un stator inducteur d'un ralentisseur électromagnétique ainsi qu'un ralentisseur électromagnétique équipé d'un tel stator.

Plus particulièrement, l'invention concerne un stator pour des ralentisseurs électromagnétiques, qui sont montés directement sur un carter d'engrenages d'une transmission de véhicule automobile, tel que le carter du pont ou de la boîte de vitesses d'un véhicule automobile.

Encore plus particulièrement, l'invention concerne un stator de ralentisseur électromagnétique destiné au montage sur boîte de vitesses et/ou sur pont d'un véhicule, comprenant au moins une bobine électromagnétique et un épanouissement polaire asymétrique sur chaque face transversale radiale d'extrémité de chaque bobine électromagnétique fixée au moyen d'une vis axiale centrale.

Un ralentisseur électromagnétique de véhicule permet d'assister un freinage classique (service) comportant notamment des patins de freins destinés à se rapprocher et s'appliquer contre au moins un disque d'un moyeu d'une roue d'un véhicule pour freiner le véhicule. Grâce à la présence de freinages d'endurances parallèles aux freins classiques, comme le ralentisseur électromagnétique, notamment pour les véhicules du type « poids lourds », la réduction de vitesse du véhicule est assurée de manière plus sûre, notamment en cas d'une longue descente, situation dans laquelle une usure prématurée des plaquettes de freins est inéluctable. En tant que freinage d'endurance couramment utilisé, le ralentisseur électromagnétique permet donc de limiter les changements des pièces usées et de diminuer les coûts et le temps d'entretien d'un véhicule.

Généralement, un ralentisseur électromagnétique comporte au moins un stator et au moins un rotor. Si le stator est directement relié à un carter d'engrenage d'une transmission de véhicule, tel qu'un carter de boîte de vitesses ou un carter d'un pont de transmission, et ne coupe pas un arbre de transmission pour monter le ralentisseur, on parle de ralentisseur « Focal » (marque déposée). Dans le cas contraire, c'est-à-dire les ralentisseurs électromagnétiques destinés à être placés sur un arbre de transmission entre un pont et une boîte de vitesses, cet arbre de transmission est coupé en deux parties ou portions par au moins un ralentisseur, et on parle de ralentisseur « Axial » (marque déposée).

Un ralentisseur électromagnétique du type Focal, décrit par exemple dans le document FR 2 577 357, comporte un stator inducteur annulaire de part et d'autre duquel sont présents un premier rotor avant et un deuxième rotor dit arrière. Le stator inducteur annulaire est constitué d'une couronne de bobines en nombre pair, d'axes parallèles à celui du ralentisseur, portées par un flasque transversal de forme générale annulaire, chaque bobine comportant un noyau polaire cylindrique de révolution en matériau magnétique qui traverse ledit flasque et un enroulement de fil électrique qui entoure ce noyau polaire de support pour la formation d'un pôle magnétique, lequel noyau est fixé, selon un axe de ce même noyau, perpendiculairement à un plan du stator, et se termine par des extrémités épanouies recouvrant partiellement la bobine tout en la retenant.

Les extrémités épanouies des noyaux sont généralement constituées par des plaquettes, appelées épanouissements polaires, ayant un contour symétrique par rapport à un plan radial passant par l'axe de l'appareil et par l'axe du noyau correspondant, et qui ont pour but principal de prolonger et de guider l'effet magnétique de la bobine.

Les épanouissements polaires remplissent plusieurs fonctions:
- ils ménagent une certaine distance entre les bobines et l'induit de manière à limiter les forces magnétiques d'attraction axiale qui s'exercent sur l'induit;
- ils assurent une bonne répartition du flux magnétique dans l'induit, et donc une génération efficace de courants de Foucault;
- ils ont en outre un rôle mécanique de maintien en place et de protection des bobines et/ou des noyaux polaires.

Dans certains cas, l'épanouissement possède une forme particulière qui le fait dépasser axialement de la bobine afin d'optimiser le passage d'un flux magnétique pour augmenter les couples dus à la création des courants de Foucault dans les ralentisseurs concernés.

FR 2574228 décrit un épanouissement polaire asymétrique, c'est-à-dire que la section circonférentielle de chaque épanouissement polaire est asymétrique par rapport au plan radial passant par l'axe du ralentisseur et par l'axe du noyau correspondant, en ce sens qu'une "corne d'entrée" s'étend plus loin de ce plan qu'une "corne de sortie". La "corne d'entrée" et la "corne de sortie" d'un épanouissement polaire correspondent, respectivement, au bord "amont" ou " avant " et au bord "aval" ou " arrière " de cet épanouissement par rapport au sens de défilement relatif de l'élément annulaire induit continu, en ce sens qu'en défilant devant chaque épanouissement, chaque point de cet élément se déplace de la "corne d'entrée" à la "corne de sortie" dudit épanouissement.

Du fait que les épanouissements polaires se présentent face au disque induit, une aire plus grande en avant qu'en arrière du plan radial passant par l'axe polaire permet d'atteindre des couples de freinage plus élevés grâce à une moindre saturation magnétique du côté arrière des épanouissements, par comparaison à la configuration classique où les épanouissements sont placés symétriquement par rapport au plan radial précité.

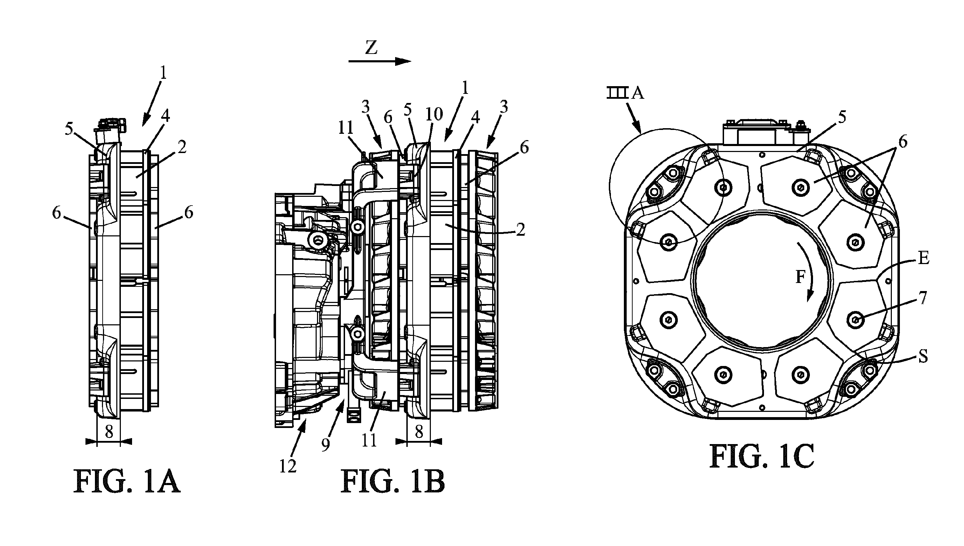

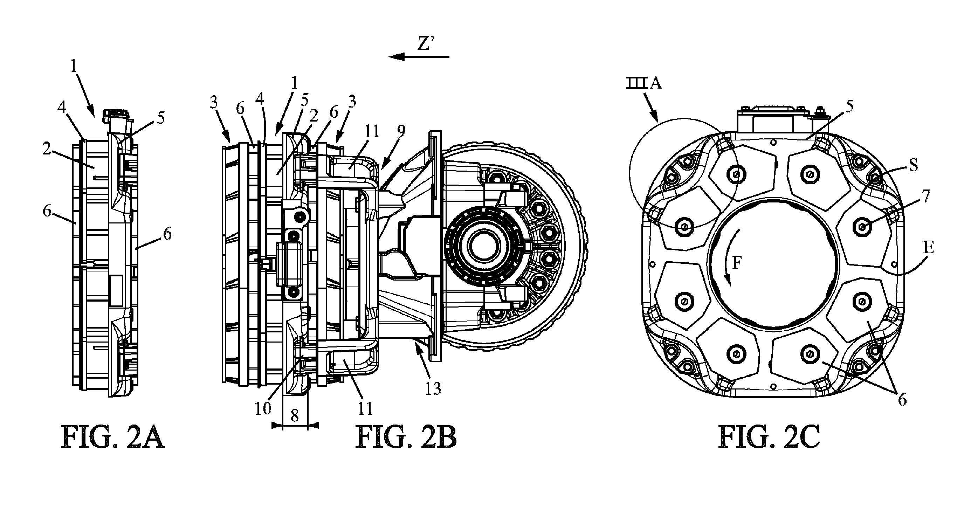

Un ralentisseur électromagnétique de type Focal possédant des épanouissements polaires asymétriques est décrit par exemple dans le document FR 2863787, et comme illustré aux figures 1A, 1B, 1C et figures 2A, 2B, 2C de l'état de la technique, annexées à la présente description et présentées ci-après, sur lesquelles un appareil à courants de Foucault comprend au milieu, un stator 1 comportant des bobines inductrices 2, et deux rotors d'induit 3, dont un de chaque côté coaxial du stator, et rotatifs par rapport au stator autour d'un axe de rotation X.

Chaque bobine est traversée par un noyau polaire cylindrique en matériau magnétique, solidaire d'une plaque radiale annulaire 4 et d'un flasque radial annulaire 5 plus épais dont le bord périphérique est rabattu axialement pour lui conférer une grande rigidité, disposés aux deux extrémités opposées des bobines, dont ces deux extrémités sont pourvues chacune d'un épanouissement polaire 6 de plus grande section fixé à l'aide par exemple une vis axiale centrale 7, sur le noyau de chaque bobine correspondante, à l'extérieur et sur la plaque radiale annulaire 4 et le flasque radial annulaire 5.

Chaque rotor (non représenté) comporte au moins un disque induit situé en regard des épanouissements polaires 6 correspondants avec interposition d'un entrefer (non représenté), dans lequel, relativement au sens de défilement (F) du disque induit devant les épanouissements polaires 6, chaque épanouissement polaire se présente face au disque induit , avec une aire plus grande en avant (corne d'entrée E) qu'en arrière (corne de sortie S) du plan radial passant par l'axe de rotation X et par l'axe de la bobine correspondante.

Les deux ensembles d'épanouissements polaires asymétriques, l'un respectivement sur chaque face transversale radiale d'extrémité de l'ensemble des bobines ont un même sens d'orientation par rapport au sens de défilement (F). Cela permet, en effet, par association avec les deux rotors d'induit correspondants, d'atteindre des couples de freinage plus élevés grâce à une moindre saturation magnétique du côté arrière des épanouissements par comparaison à la configuration classique où les épanouissements sont placés symétriquement par rapport au plan radial précité.

Le stator 1, constitué par un ensemble d'épanouissements 6 - plaque 4 - bobines 2 -flasque 5 - épanouissements, du type sandwich, est disposé de telle manière qu'il est aussi pris en sandwich entre les deux rotors (avant et arrière) avec présence d'entrefers. Le stator 1 est porté par ce flasque 5 transversal de forme générale annulaire doté à sa périphérie externe d'un rebord axial 8 de rigidification, et monté en porte-à-faux sur le carter considéré à l'aide d'une ossature 9 en forme de cloche ajourée, par l'intermédiaire de pattes de fixation 10 de stator solidaires du flasque 5 du stator, fixé par des vis à quatre bras 11 de l'ossature 9.

L'ossature est une pièce rigide qui peut être réalisée par exemple en fonte de type GS et présente des bras de fixation 11 de stator en correspondance avec les pattes de fixation 10 de stator. Ces pattes de fixation de stator sont traversées par les vis susmentionnées, dont les têtes s'appuient sur la face extérieure des pattes de fixation de stator pour fixer le stator 1 aux bras 11 de l'ossature 9, elle-même déjà fixée au corps principal du carter, afin d'assurer le montage direct du ralentisseur électromagnétique, de manière connue, sur un carter d'engrenages d'une transmission de véhicule automobile, ainsi en porte à faux à la sortie de la boîte de vitesses 12 ou du pont 13 de ce véhicule par ses rotors (non représentés).

La fixation du stator de ralentisseur magnétique du type « Focal », possédant une double face d'épanouissements asymétriques orientés comme explicité ci-dessus, présente des inconvénients majeurs dans la pratique. Car ce genre de configuration nécessite l'utilisation soit d'un stator spécifiquement conçu pour boîte de vitesses, soit d'un stator spécifiquement pour pont, du fait que le circuit magnétique est guidé par les épanouissements asymétriques identiquement orientés sur chaque face (gauche et droite) du stator, selon le sens de défilement du rotor d'induit devant les épanouissements polaires asymétriques comme précité. Cela exige un sens d'installation unique pour un stator possédant un circuit magnétique guidé et des moyens de support et de fixation, par exemple, le flasque de support et les pattes de fixation aussi aptes à ce guidage des épanouissements. Pour chaque type de montage, boîte de vitesses ou pont, il existe donc un design différent, les deux ne sont pas interchangeables.

De plus, la fabrication et la commercialisation de ces deux types de ralentisseurs spécifiques nécessitent une gestion logistique compliquée et donc un investissement supplémentaire.

La présente invention a notamment pour but de pallier ces inconvénients.

La présente invention propose une nouvelle conception pour les ralentisseurs type « Focal » ayant une double face d'épanouissements polaires asymétriques, une nouvelle conception d'un stator standardisé qui peut donc se fixer indifféremment sur une boîte de vitesses et sur un pont d'un véhicule sans aucune modification de sa structure, malgré un circuit magnétique guidé par les épanouissements asymétriques orientés, qui restent toujours spécifiques par rapport au sens du défilement du rotor entrainé par la transmission du véhicule.

A cet effet, selon l'invention, un stator inducteur de ralentisseur électromagnétique d'un véhicule comportant:
- au moins un ensemble de bobines électromagnétiques,
- au moins un support sensiblement radial et annulaire de bobines électromagnétiques,
- un épanouissement polaire asymétrique sur chaque face transversale radiale des deux extrémités de chacune desdites bobines électromagnétiques,
   est **caractérisé en ce qu'il** comporte également
- des moyens de fixation dudit stator qui sont symétriques par rapport à un plan médian entre lesdites faces transversales et parallèles à ces dernières, et fixés audit support de bobines électromagnétiques pour fixer ledit stator indifféremment du côté de l'une ou l'autre desdites faces transversales à un support de stator dudit véhicule, à l'aide d'organes de fixation.

Dans un mode de réalisation préféré, le support de bobines électromagnétiques comporte un flasque radial annulaire à chacune des extrémités opposées dudit ensemble des bobines électromagnétiques, et les moyens de fixation du stator sont des plots de fixation troués symétriques par rapport audit plan médian, reliant lesdits flasques radiaux pour fixation dudit stator de ralentisseur électromagnétique à un support de stator dudit véhicule à l'aide d'organes de fixation.

Dans un autre mode de réalisation, le support de bobines électromagnétiques comporte une plaque radiale annulaire et un flasque radial annulaire à chacune des deux extrémités opposées dudit ensemble des bobines électromagnétiques, et les moyens de fixation du stator sont des trous de fixation ménagés dans des coins répartis symétriquement sur la périphérie extérieure du flasque et aménagés de manière symétrique selon l'épaisseur du stator; il est possible aussi de prévoir des pattes de fixation symétriques par rapport audit plan médian, solidaires du flaque du stator, recouvrant des trous de fixation.

Les organes de fixation peuvent être des vis, des boulons ou tous autres moyens de fixation mécanique conventionnels connus.

Par ailleurs, l'invention a également pour objet un ralentisseur électromagnétique du type « Focal », ayant une double face d'épanouissements polaires asymétriques, et comprenant au moins un stator tel que défini ci-dessus.

D'autres caractéristiques et avantages de l'invention ressortiront de la description donnée ci-dessous, à titre non limitatif, des exemples de réalisation représentés sur les dessins, sur lesquels :
- les Figs. 1A, 1B et 1C sont des vues de côté d'un stator d'un ralentisseur électromagnétique type « Focal » de l'état de la technique, ayant une double face d'épanouissements asymétriques dédiés « boîte de vitesses » pour la Fig 1A, de montage du ralentisseur précité sur la boîte de vitesses pour la Fig. 1B, et une vue depuis la boîte de vitesse, suivant la direction Z , du stator de l'état de la technique, pour la Fig. 1C;
- les Figs. 2A, 2B et 2C sont des vues respectivement analogues aux Figs. 1A, 1B et 1C, d'un stator d'un ralentisseur électromagnétique type « Focal » de l'état de la technique, mais ayant une double face d'épanouissements asymétriques dédiés « pont » pour la Fig 2A, de montage du ralentisseur précité sur le pont pour la Fig. 2B, et une vue depuis le pont, suivant la direction Z', du stator de l'état de la technique, pour la Fig. 2C;

Les figures 1A-C et 2A-C étant déjà décrites ci-dessus.

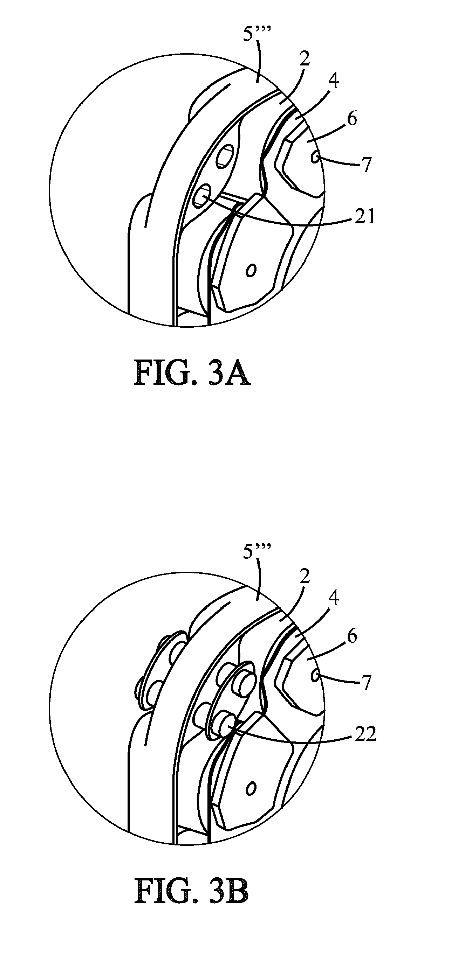

- les Figs. 3A et 3B sont des vues partielles schématiques en coupe axiale, suivant le plan P indiqué sur les figures 1C ou 2C, des trous de fixation du stator pour la Fig. 3A et d'une patte de fixation prolongée pour la Fig. 3B, selon le premier mode de réalisation de l'invention ;

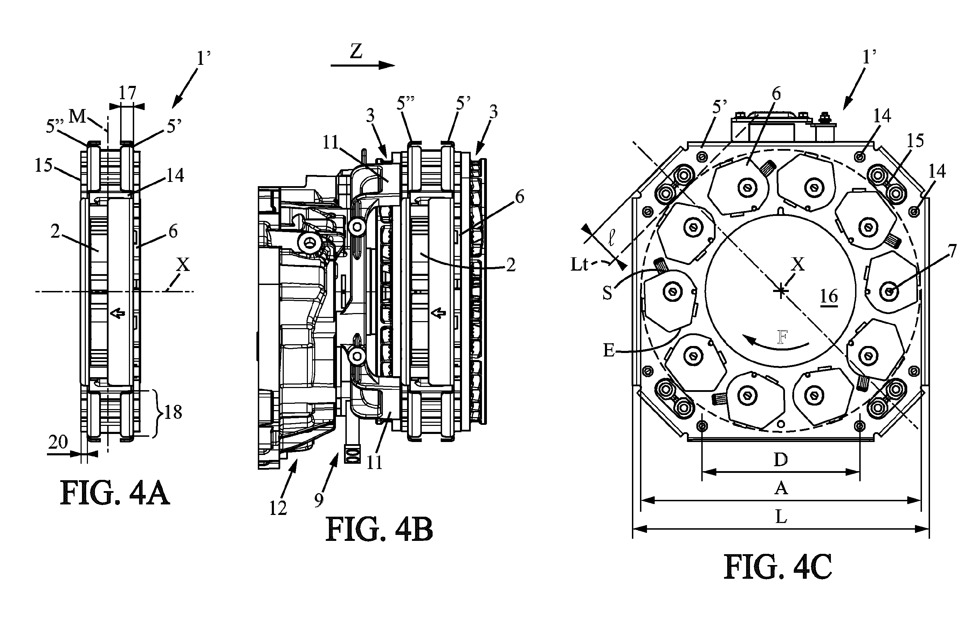

- les Figs. 4A, 4B, et 4C sont des vues de côté d'un stator d'un ralentisseur électromagnétique type « Focal » de la présente invention, ayant une double face d'épanouissements asymétriques dédiés « boîte de vitesses » pour la Fig. 4A, de montage du ralentisseur précité sur la boîte de vitesses pour la Fig. 4B, et une vue depuis la boite de vitesse, suivant la direction Z, du stator pour la Fig. 4C selon le mode de réalisation préféré de la présente invention;

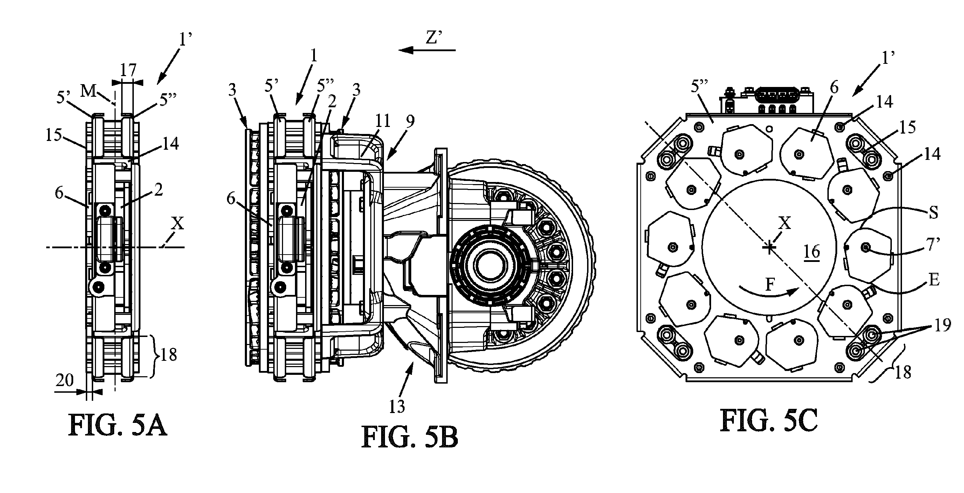

- les Figs. 5A, 5B et 5C sont des vues respectivement analogues aux Figs. 4A, 4B et 4C, d'un stator d'un ralentisseur électromagnétique type « Focal » selon le mode de réalisation préféré de la présente invention, mais ayant une double face d'épanouissements asymétriques dédiés « pont » pour la Fig. 5A, de montage du ralentisseur précité sur le pont pour la Fig. 5B, et une vue depuis le pont, suivant la direction Z', du stator pour la Fig. 4C selon le mode de réalisation préféré de la présente invention;

En référence aux dessins annexés, l'invention est décrite ci-après dans son application préférée, mais non limitative, à des stators de ralentisseurs électromagnétiques type « Focal » ayant une double face d'épanouissements asymétriques orientés.

Les éléments structurellement ou fonctionnellement identiques, présents dans plusieurs figures distinctes, sont repérés par une seule et même référence numérique ou alphanumérique.

Selon un premier mode de réalisation du stator de l'invention, représentée sur les figures 3A-3B, le support de bobines électromagnétiques comporte une plaque 4 radiale annulaire et un flasque 5"' radial annulaire à chacune des deux extrémités opposées de l'ensemble des bobines électromagnétiques 2, et les moyens de fixation du stator sont des trous 21 de fixation ménagés dans des coins répartis symétriquement sur la périphérie extérieure du flasque 5"' et aménagés de manière symétrique selon l'épaisseur du stator; il est possible aussi de prévoir des pattes 22 de fixation symétriques par rapport le plan médian, solidaires du flaque 5"' du stator, recouvrant des trous de fixation.

Selon la conception nouvelle d'un mode de réalisation préféré du stator selon l'invention, représentée sur les figures 4A-C et 5A-C, le stator 1' du ralentisseur électromagnétique comporte des ensembles de bobines 3 en nombre pair, par exemple dix comme illustré dans les figures 4C et 5C, réparties angulairement de manière régulière autour de l'axe X du stator.

A ses deux extrémités opposées, un flasque de gauche 5' et un flasque de droite 5", quasiment identiques l'un à l'autre, sont reliés ensemble au moins dans les quatre coins symétriques par des moyens de montage 14 de stator conventionnels, par exemple des pièces intercalaires telle que des cales ou des tubes comme illustrées dans les figures 4A-C et 5A-C. Les moyens de fixation 15 de stator symétriques par rapport à l'axe X et par rapport au plan médian M sont aussi disposés dans les quatre coins symétriques, reliant eux aussi, les deux flasques 5' et 5" de support de stator. Ici, le rotor du ralentisseur n'est pas présenté pour simplifier la présentation.

Plus précisément, les figures 4C et 5C illustrent respectivement une vue depuis la boîte de vitesses, suivant la direction Z et une vue depuis le Pont suivant la direction Z' du stator selon un mode de réalisation préféré de l'invention, dans lequel les épanouissements asymétriques 6 orientés sont destinés au montage sur le carter de la boîte de vitesses (non représenté), c'est-à-dire, chaque épanouissement polaire présente face au disque du rotor d'induit (non présenté) une aire plus grande en avant (corne d'entrée E) qu'en arrière (corne de sortie S ) du plan radial passant par l'axe de rotation X (aussi l'axe du stator) et par l'axe de la bobine correspondante. Le disque du rotor d'induit (non représenté) en regard est entrainé par l'arbre de sortie ou d'entrée respectivement de la boîte de vitesses ou du pont, et tourne dans le même sens antihoraire que l'arbre (aussi le sens de défilement F précité).

Chaque épanouissement 6 disposé devant le flasque 5' ou 5" de support du stator du même coté, est fixé au moyen d'une vis axiale 7 ou 7' sur le centre du noyau (non représenté) de la bobine correspondante. Axialement, chaque épanouissement 6 est délimité par une face latérale externe d'extrémité, et toutes les faces latérales externes des épanouissements situées de ce même côté du stator 1' sont coplanaires entre elles et parallèles aux flasques 5' et 5" du support de stator.

Le flasque du support de stator est porté par le carter par l'intermédiaire d'une structure en forme de cloche ajourée comme présenté précédemment.

Ces flasques 5' et 5" du support de stator sont eux-mêmes percés en leur centre par un trou circulaire 16 de relativement grand diamètre D et à sa périphérie par des trous (non représentés) plus petits et correspondant au nombre des épanouissements 6, par exemple dix comme illustré dans les figures 4A-C et 5A-C, et propres à recevoir chacun un noyau de bobine. Les noyaux sont terminés par des épanouissements polaires asymétriques rapportés sur leurs extrémités axiales et devant les flasques 5' et 5" comme présenté ci-dessous.

Le diamètre A du cercle extérieur C circonscrit aux extrémités externes des côtés verticaux de tous les épanouissements est légèrement inférieur à la largeur hors tout L du stator, largeur qui est celle du flasque, lui-même généralement délimité sur son pourtour par un rebord rabattu (17) de renforcement et de protection.

Les flasques 5' et 5" sont d'une forme sensiblement annulaire, le pourtour complet de ces flasques et donc celui de leur bord rabattu 17, présente généralement une forme permettant d'avoir une largeur l dans les quatre coins répartis régulièrement autour de l'axe X correspondant aux quatre bras de l'ossature (non représentés), de telle manière que cette largeur délimitée par le rebord rabattu 17 du coin et une ligne Lt sensiblement tangente au cercle C de diamètre A est suffisamment grande pour permettre la disposition des moyens de montage 14 de stator et les moyens de fixation 15 de stator, qui sont symétriques par rapport au plan médian M.

Dans le cas de dix bobines comme illustré dans les figures 4C et 5C, le pourtour complet de ce flasque présente avantageusement la forme générale d'un carré à coins arrondis, ou coupés, pour en faciliter la fabrication, comme illustré dans les figures 4C et 5C, c'est-à-dire, remplacés par quatre côtés obliques 18 plus petits que les quatre côtés du carré, dont chacun est sensiblement parallèle à la ligne Lt définie ci-dessus dans ce coin. Les autres formes du pourtour complet du flasque sont définies en fonction du nombre des bobines.

Les moyens de fixation 15 de stator sont disposés dans ces quatre coins, symétriquement sur le prolongement du diamètre A traversant l'angle du carré déjà arrondi ou coupé, correspondant aux bras d'ossature précités, reliant ainsi les deux flasques du support 5' et 5" de stator disposés aux deux extrémités opposées dudit ensemble des bobines électromagnétiques.

Ces moyens de fixation 15 de stator peuvent être des plots de fixation troués symétriques par rapport au plan médian M, comme illustrés dans les figures 4A-C et 5A-C, reliant les deux flasques de support 5' et 5" pour fixation du stator à un support de stator du véhicule, comme les quatre bras de l'ossature précités, à l'aide d'organes de fixation.

L'alésage 19 de chaque plot est lisse et réalisé de telle manière qu'un organe de fixation (par exemple la tige d'une vis) est susceptible de le traverser sur toute sa longueur, légèrement plus grande que l'épaisseur du stator entre les deux flasques 5' et 5", formant ainsi, par la partie en saillie 20 par rapport aux surfaces des flasques 5' et 5", un logement pour la tige de l'organe de fixation (vis).

En utilisant de tels plots sensiblement symétriques d'un côté à l'autre ayant un alésage traversant l'épaisseur du stator, il est possible de fixer le stator 1' à l'aide d'organes de fixation, indifféremment d'un côté ou de l'autre, comme les composants du stator lui même sont aussi symétriques d'un côté à l'autre, et permettent de monter le stator 1' de même conception selon l'invention, d'un côté au carter de la boîte de vitesses et de l'autre côté au carter du pont d'un véhicule.

Un moyen de fixation du stator comporte généralement deux plots parallèles latéralement reliés en une seule pièce pour fixer le stator 1' par les organes de fixation aux bras de l'ossature précitée. L'organe de fixation peut être au moins un goujon comme celui habituellement utilisé pour fixer le stator aux bras de l'ossature précités. Ces goujons sont destinés à traverser toute la longueur d'alésage et leur tige est rentrée dans une partie filetée de fixation des bras de l'ossature précités. En variante, l'organe de fixation peut être une vis, un boulon, un tirant ou tout autre moyen conventionnel à cet effet. À titre d'exemple, les dimensions des plots sont de 100mm d'épaisseur, 120mm de largeur et de 26mm de hauteur.

Quel que soit le mode de réalisation adopté, on obtient finalement un ralentisseur du type « Focal » dont le stator est standardisé; il n'est plus nécessaire de distinguer les deux types de stators, ainsi que les deux types de ralentisseurs électromagnétiques, au montage sur un véhicule comme ceux antérieurement connus.

La gestion de fabrication et de commercialisation des ralentisseurs est également simplifiée et optimisée par une seule référence standardisée, entrainant par conséquence, une diminution de l'investissement et du coût d'utilisation.

Naturellement, la présente invention est sujette à de nombreuses variantes quant à sa mise en ouvre. Bien qu'un ou plusieurs modes de réalisations aient été décrits, on comprend bien qu'il n'est pas concevable d'identifier de manière exhaustive tous les modes possibles.

## Revendications

1. Un stator (1') inducteur de ralentisseur électromagnétique comportant:
- au moins un ensemble de bobines (2) électromagnétiques,
- au moins un support (5', 5", 5"') sensiblement annulaire de bobines électromagnétiques,
- un épanouissement (6) polaire asymétrique sur chaque face transversale radiale des deux extrémités de chacune desdites bobines électromagnétiques, **caractérisé en ce qu'il** comporte également
- des moyens de fixation (15) dudit stator qui sont symétriques par rapport à un plan médian entre lesdites faces transversales et parallèle à ces dernières, et qui sont fixés audit support (5', 5", 5"') de bobine (2) électromagnétique pour fixer ledit stator (1') du côté de l'une ou l'autre desdites faces transversales à un support de stator dudit véhicule à l'aide d'organes de fixation.

2. Stator inducteur de ralentisseur électromagnétique selon la revendication 1, **caractérisé en ce que** le moyen de support de stator comprend un premier flasque (5') radial annulaire et un deuxième flasque (5 ") radial annulaire aux deux extrémités opposées dudit ensemble des bobines électromagnétiques.

3. Stator inducteur de ralentisseur électromagnétique selon la revendication 1 ou 2, **caractérisé en ce que** les moyens de fixation (15) du stator sont des plots de fixation troués, symétriques par rapport au plan médian (M).

4. Stator inducteur de ralentisseur électromagnétique selon la revendication 1, **caractérisé en ce que** :
- le support de stator est constitué par une plaque (4) radiale annulaire et un flasque (5"') radial annulaire, chacun à l'une respectivement des deux extrémités opposées dudit ensemble des bobines électromagnétiques,
les moyens de fixation dudit stator sont disposés sur le flasque (5"').

5. Stator inducteur de ralentisseur électromagnétique selon la revendication 4, **caractérisé en ce que** les moyens de fixation du stator sont des trous de fixation (21) ménagés dans des coins répartis symétriquement sur la périphérie extérieure dudit flasque (5"') et aménagés de manière symétrique selon l'épaisseur du stator.

6. Stator inducteur de ralentisseur électromagnétique selon la revendication 5, **caractérisé en ce que** les moyens de fixation du stator sont des pattes (22) de fixation symétriques par rapport audit plan médian (M), solidaires dudit flaque (5"') du stator, recouvrant des trous de fixation (21).

7. Ralentisseur électromagnétique pour véhicule automobile, **caractérisé en ce qu'il** comprend au moins un stator selon l'une quelconque des revendications 1 à 6.
